# EUROPEAN PATENT SPECIFICATION

(11) **EP 2 837 483 B1**
(45) Date of publication and mention of the grant of the patent: **18.04.2018**
(21) Application number: 14175802.9
(22) Date of filing: 04.07.2014
(51) Int. Cl.: B29C 47/00, B29C 47/06, B29C 47/10, B29C 70/52, B29C 70/74, B29L 31/00

(54) **Structural insulation profile and method of production thereof**
Strukturelles Isolationsprofil und Verfahren zu seiner Herstellung
Profilé isolant structurel et son procédé de production

(30) Priority: 04.07.2013 EP 13175137
(43) Date of publication of application: 18.02.2015
(73) Proprietor: FIBERLINE A/S, 5500 Middelfart (DK)
(72) Inventor: Thorning, Peter, 6000 Kolding (DK)
(74) Representative: Budde Schou A/S

(56) References cited:
- WO-A1-2007/036606
- FR-A1- 2 729 397
- SUMERAK J E ET AL: "ASM Handbook , Composites, Pultrusion", 1 December 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 550 - 564, XP002539483, ISBN: 978-0-87170-703-1 * page 550, column 2 * * page 551, column 1 *

## Description

The present invention relates generally to fibre reinforced polymers and in particular to structural insulation profiles having a deformation zone, for fastening purposes, and methods of production thereof.

Fibre reinforced polymers are made from a matrix material such as resin or plastics based materials reinforced with reinforcing fibres such as glass fibres, carbon fibre, kevlar fibre, etc. The resin may comprise polyester, vinyl ester, phenol, epoxy or polyurethane, and the plastics material may for example be a thermoplastic plastics material such as acrylic, nylon, polyethylene, polypropylene or polyvinyl chloride.

The matrix material and the reinforcing fibres may be combined by for example immersing the reinforcing fibres in the liquid matrix material for example by mixing. After shaping the reinforcing fibres and the matrix material, for example using a die or a mold, the matrix material is cured or solidified according to the type of matrix material. The result is a strong and light material, the strength and rigidity being influenced by the type of matrix material and reinforcing fibres, and the arrangement of the reinforcing fibres within the matrix material of the finished fibre reinforced polymer part.

These properties have resulted in that fibre reinforced polymers are now used in several types of constructions such as wind turbines, aeroplanes, cars, boats, etc. Other properties of fibre reinforced polymers, such as weather resistance and heat resistance, have further resulted in the use of fibre reinforced polymers as structural components in building components such as doors, windows and window frames, deck components on ships to name a few.

In the above listed applications for fibre reinforced polymers there is often a need to attach components made of fibre reinforced polymers to other structural components. These other structural components may for example be the steel or aluminium chassis of a car, the metal engine mounts of an aeroplane, the hub of the turbine of a wind turbine, the inner and outer leafs of a door, or the inner and outer metal profiles of a window frame etc. Due to the hardness of the matrix material of the fibre reinforced polymer it is however difficult to attach the fibre reinforced polymer component using conventional techniques. Instead, gluing and embedding attachment structures such as bolts in the fibre reinforced polymer component have been used, one method of using embedded attachments structures being described in WO2003057456.

FR 2729397 A relates to a composite thermoplastic product including an elastomer. The elastomer has the functions of sealing and/or damping vibrations.

For structural insulation profiles, which in the context of the present invention comprises fibre reinforced polymer profiles used as components of doors, windows, facades, walls, floors and other building components, in which building components the fibre reinforced polymers properties of low heat conductivity and high strength provide advantages over more traditional materials such as wood, metal, rock wool and other structural and isolative materials, the problem is how to fasten the structural insulation profile to the other structural components of the building component. For example, the structural insulation profile may need to be fastened to one or more metal profiles to form for example a window or door frame. To avoid compromising the advantage of using the structural insulation profile, the use of adhesives is preferably avoided as adhesives may melt or disintegrate at high temperatures causing detachment of the structural insulation profile from whatever structural component the structural insulation profile is fastened to.

It is therefore an object of the present invention to provide a structural insulation profile which is attached in a simple and secure way to other structural components.

It is further an object of the present invention to provide a structural insulation profile which may be attached to other structural components in a heat resistant way.

It is a further an object of the present invention to provide a method of producing a structural insulation profile which meets at least one of the above objects.

At least one of the above objects or at least one of numerous further objects which will be evident from the below description of the present invention, is according to a first aspect of the present invention as claimed in independent claim 1. The deformation zones defined by the deformable material in the solid matrix can be deformed by a pressure greater than the compressive strength of the deformable material. The deformation of the deformation zone by pressure results in an indentation in the structural insulation profile. The indentation and the matrix material and any reinforcing fibres surrounding the indentation provide an interference fit which can be used to fasten the structural insulation profile to for example a structural component clamped around the structural insulation profile over the deformation zone.

The structural insulation profile is fastened to a structural component by providing the structural component with cooperating structures defining a clamping space. After placing the structural insulation profile so that part of it, including the deformation zone, is positioned in the clamping space, the cooperating structures are forced together to clamp the structural insulation profile and deform the deformation zone to form the indentation. The interference fit between the indentation and the matrix material and any reinforcing fibres surrounding the indentation and the cooperating structures, at least one of which now partly extends into the indentation and engages the matrix material and any reinforcing fibres surrounding the indentation, prevents the detachment of the structural insulation profile from the structural component.

Thus, the structural insulation profile according to the first aspect is attached in a simple and secure way to other structural components.

Provided that heat does not cause fatigue in the cooperating structures, the structural insulation profile can further be attached to other structural components in a heat resistant way as no adhesive is needed.

The solid matrix is typically polyester, vinyl ester, phenol, epoxy or polyurethane resin. Alternatively the solid matrix material is a thermoplastic material.

The structural insulation profile may have different shapes according to the specific building component in which it is to be used and the type of other structural components it is to be fastened to. Typically, however, it is shaped as an elongated profile having a constant cross section. Some examples include a structural insulation profile in the form of a rod or tube having a round or square cross section, and a structural insulation profile in the shape of a beam such as an I-beam having an I-shaped cross section. However, many other shapes are possible.

In the context of the present invention, the term outer surface is to be construed as any surface delimiting the solid matrix material from the surroundings. The outer surface may thus, in the case of a rod having a solid cross section, be found at the edge of the cross section. On the other hand, if the structural insulation profile is a hollow tube, then the outer surface is found both on the part of the solid matrix facing away from the axis of the tube, and on the part of the solid matrix faxing towards the axis of the tube.

It is further contemplated that the structural insulation profile may comprise a profile having a central elongated body and a laterally disposed flange connected along its length to the central elongated body, the deformable material being provided in the flange such that the structural insulation profile may be fastened to other building structural components using the flange.

The reinforcing fibres are typically selected from glass fibres, carbon fibres, kevlar fibres, or mixtures thereof. The reinforcing fibres may be provided as long continuous fibres or as short fibres. The reinforcing fibres may be provided as one or more braids, bands, webs or mats.

In the context of the present invention, the term deformable should be understood as also comprising the terms collapsible, contractible, crushable, and compressible. The result of the compressive strength of the deformable material being less than the compressive strength of the solid matrix material and the reinforcing fibres is that the deformable material, upon application of a pressure, will deform, before the solid matrix material and the reinforcing fibres.

In the context of the present invention, the term compatible has the meaning that the materials referred to, i.e. the deformable material and the matrix material, when joined in the structural insulation profile do not spontaneously separate or delaminate along the boundary between the materials.

In the context of the present invention, the term compressive strength is to be understood as comprising strength in the sense of the capability of the item referred to, to withstand deformation upon being subjected to a pressure. Thus, the deformable material, having a lower compressive strength, will deform more for a given pressure, i.e. force per area, than for example the solid matrix material having a higher compressive strength.

In the context of the present invention, the term embedded is to be understood in the sense of enclosed closely in or as if in a matrix.
Thus, the wording "at least partially embedded" is to be understood in the sense that the item referred to is partly enclosed in or as if in a matrix.

If the deformable material is embedded in the solid matrix material, the structural insulation profile becomes easy and safe to handle as there is no risk of contaminating the surrounding environment with deformable material. Further, the solid matrix material having a higher compressive strength than the deformable material, protects the deformable material from damage during handling of the structural insulation profile. Additionally, in some methods of manufacturing the structural insulation profile, a layer of solid matrix material will be formed over the deformable material such that it becomes embedded in the solid matrix material.

In the context of the present invention, the term adjacent is to be understood as comprising the meaning of next to, neighbouring.
Further, in the context of the present invention the term exposed is to be understood as comprising the meaning of any of being revealed, being visible, being accessible.

Thus, where the deformable material is adjacent to at least a portion of the outer surface of the solid matrix material, there will be a layer of solid matrix material between the deformable material and the outer surface of the solid matrix material. In this case the deformable material will be embedded in the solid matrix material.

Preferably, the thickness of the layer of solid matrix material should be as small as possible so that the solid matrix material does not prevent deformation of the deformable material. If the layer is thicker, i.e. the deformable matrix material is placed further away from the outer surface, then the pressure needed to deform the deformable material must be increased so that it is sufficient to break or deform the layer of solid matrix material.

On the other hand, where the deformable material is exposed at at least a portion of the outer surface the deformable material makes up a part of the outer surface of the solid matrix material as the deformable material is now revealed.
In this case the deformable material will be partially embedded in the solid matrix material.

If the deformable material is partially embedded in the solid matrix it becomes easier to deform the deformable material, due to there being no solid matrix material covering at least part of the deformable material. In some other methods of manufacturing the structural insulation profile, the solid matrix material will not cover all of the deformable material such that the deformable material becomes only partially embedded in the solid matrix material.

To deform the deformable material, the pressure or force per area applied to the deformable material must overcome the compressive strength of the deformable material. Preferably, the pressure is less than the compressive strength of the solid matrix material and the reinforcing fibres to prevent damage to the solid matrix material and the reinforcing fibres.

The at least one portion of the outer surface of the solid matrix material may comprise more than one portion and may be shaped as dots or ellipsoids, although elongated ribbons extending along the structural insulation profile are preferred.

It is further contemplated within the context of the present invention that the deformable material may be at least partially embedded adjacent to, or exposed at substantially all of the outer surface of the structural insulation profile, this allowing the structural insulation profile to be fastened to a structural component at any position on its outer surface.

The depth of the deformation zone, corresponding to the thickness of the deformable material at the deformation zone, should be less than half the thickness of the structural insulation profile at the deformation zone so as to provide sufficient space and volume for the reinforcing fibres surrounding the deformable material. This ensures that the strength of the structural insulation profile is not unduly compromised at the deformation zone due to the comparably lower strength, corresponding to lower compressive strength, of the deformable material.

In the preferred embodiment of the structural insulation profile according to the first aspect of the present invention, the structural insulation profile comprises a generally planar elongated web having two opposite generally planar longitudinal side portions running the length of the elongated web, each side portion having a longitudinal edge, the deformable material being arranged along the longitudinal edges.

This is advantageous as it provides two deformation zones, thus allowing the structural insulation profile to be fastened to two other structural components such as metal profiles. The deformable material may be arranged as a continuous ribbon, or as discrete dots or patches. The deformable material may be arranged on the same side of the elongated web, or alternatively the deformable material arranged along one of the longitudinal edge may be arranged on the side of the elongated web facing away from the side on which the deformable material along the other longitudinal edge is arranged.

In an alternative embodiment of the structural insulation profile according to the first aspect of the present invention, the deformable material is arranged on the longitudinal edges.

This is advantageous as it allows the structural insulation profile to be simply clamped between opposing surfaces of other structural components. The deformation zones along the longitudinal edges should face away from each other.
The deformable material may be arranged as a continuous ribbon, or as discrete dots or patches.

In the preferred embodiment of the structural insulation profile according to the first aspect of the present invention the deformable material is arranged adjacent the longitudinal edges.

This is advantageous as it allows the edge to be clamped, for example between two parallel webs of a metal profile. The solid matrix material and any reinforcing fibres present between the deformation zone and the longitudinal edge prevents the structural insulation profile from slipping out of attachment with the metal profile.

In the preferred embodiment of the structural insulation profile according to the first aspect of the present invention the side portions are angled in relation to the elongated web.

This is advantageous in that it allows for more possibilities of connecting the structural insulation profile to other structural components. The side portions are preferably perpendicular to the elongated web.

In the preferred embodiment of the structural insulation profile according to the first aspect of the present invention, the elongated web comprises a longitudinal flange for arranging the structural insulation profile opposite to, and spaced apart from, a further structural insulation profile.

This is advantageous as it allows further assembly of structural insulation profiles for use with structural components in building components such as doors, windows, walls etc. Thus, the longitudinal flange may also be considered to be a configuration element as it can be used to assemble the structural insulation profile to other structural components, including further structural insulation profiles.
Preferably, the elongated web comprises at least two longitudinal flanges positioned on the same side of the elongated web at different distances from the centre line of the structural insulation profile such that two lengths of structural insulation profile may be assembled "back to back", i.e. with the longitudinal flanges of each structural insulation profile contacting the elongated web of the other of the structural insulation profiles.

In the preferred embodiment of the structural insulation profile according to the first aspect of the present invention, the solid matrix material comprises polyurethane. This is advantageous as polyurethane is presently considered the best material as it is both strong and durable.

In the preferred embodiment of the structural insulation profile according to the first aspect of the present invention, the deformable material comprises thermoplastic fibres, preferably in the form of rovings, texturized rovings, a flat braid, or spun bond. Alternatively the deformable material comprises a polymeric material.

This is advantageous in that thermoplastic fibres are cheap and easy to combine with the reinforcing fibres and can be handled similarly when producing the structural insulation profile. Further, thermoplastic fibres are easily spun or formed into rovings, braids or spun bond.

The thermoplastics fibres may be made from acrylic, nylon, polyethylene, polypropylene or poly vinyl chloride. The deformable material may comprise a mixture of glass fibres and thermoplastic fibres.

The polymeric material is preferably a plastic having a compressive strength less than the compressive strength of the solid matrix material. Suitable polymeric materials include polyethylene.

Although thermoplastic fibres or a polymeric material are preferred, it is contemplated within the context of the present invention to use other materials as deformable materials including hollow gas filled glass-fibres, hollow glass beads, and LECA (light expanded clay aggregate) pebbles.

A building component comprising the structural insulation profile according to the first aspect of the present invention has the advantage of being light and resistant to heat. Preferably, the building component is a door or window having outer and inner metal profiles for defining an outer and inner frame surface, the metal profiles being connected to each other via one or more structural insulation profiles according to the first aspect of the present invention, the structural insulation profiles providing rigidity and heat insulation between the outer and the inner frame surfaces.

At least one of the above objects, or at least one of numerous further objects which will be evident from the below description of the present invention, is according to a second aspect of the present invention moreover achieved by a method according to independent claim 10.

The method according to the second aspect of the present invention provides a structural insulation profile according to the first aspect of the present invention. Steps i-iii should be performed before step iv - vii. Steps iv and vii may be performed simultaneously.

The matrix material is preferably liquid such as a mixture of liquid reactants for a thermosetting matrix material or a melt for a thermoplastic matrix material.

Thus the matrix material may be a mix of the components which when having cured forms a solid polyester, vinyl ester, phenol, epoxy or polyurethane resin. Alternatively the matrix material may be a thermoplastic material in molten state capable of solidifying, when cooled below its melting temperature, into the solid thermoplastic material.

The reinforcing fibres are typically selected from glass fibres, carbon fibres, kevlar fibres, or mixtures thereof. The reinforcing fibres may be provided as long continuous fibres or as short fibres. The reinforcing fibres may be provided as one or more braids, bands, webs or mats.

The structural insulation profile produced by the method according to the second aspect of the present insulation profile is a structural insulation profile according to the first aspect of the present invention, thus features of embodiments of the structural insulation profile described with reference to the first aspect of the present invention may be used to define features of the method according to the second aspect of the present invention.

The arranging of the reinforcing fibres should be done according to the desired structural and strength properties of the structural insulation profile. Preferably, the reinforcing fibres are arranged parallel along the structural insulation profile. Preferably, the first portion is filled with the reinforcing fibres.

The final cross section of the structural insulation profile refers to the cross section for the structural insulation profile according to the first aspect of the present invention.

The second portion may be divided into two or more partial portions to provide two or more deformation zones.

The second portion is devoid of reinforcing fibres so that there is space for the deformable material and so that the deformable material may deform.

In the context of the present invention the term outer edge is to be construed as any edge delimiting the item referred to from the surroundings. Thus the outer edge of the final cross section may thus, for a solid cross section, be found at the edge of the cross section. On the other hand, if the structural insulation profile is a hollow tube, having a final cross section which is hollow, then the outer edge is found both on the edge of the cross section facing away from the axis of the tube, and on the edge of the cross section faxing towards the axis of the tube.

Impregnating the reinforcing fibres with the matrix material may comprise wetting the reinforcing fibres. Preferably the reinforcing fibres should be impregnated such that each and every reinforcing fibre is embedded in the matrix material.

The step of impregnating the reinforcing fibres with the matrix material may comprise the sub step of shaping the matrix material such that the matrix material is provided at least within the first portion and at the most within the final cross section. The reinforcing fibres may be impregnated with the matrix material using pressure. Where step vii is performed before step iv and v the pressure used for impregnating should be below the compressive strength of the deformable material.

In the preferred embodiment of the method according to the second aspect of the present invention the deformable material comprises a solid material and step vii is performed prior to step vi, preferably prior to step v, and most preferably concurrent with step iv.

This is advantageous as it simplifies the process of producing the structural insulation profile by arranging the deformable material with the reinforcing fibres and the matrix material before curing. The solid material may be any of the solid materials given for the deformable material above for the structural insulation profile according to the first aspect of the present invention, but preferably comprises thermoplastic fibres.

When step vii is performed prior to step v, then the matrix material may contact the deformable material in step v to at least partially impregnate it. This helps in attaching the deformable material to the matrix material and the reinforcing fibres.

In an equally preferred embodiment of the method according to the second aspect of the present invention, the deformable material comprises a flowable material capable of transforming into solid form through curing or solidifying, step vii is performed after step vi, and the method further comprises the step of:
x. curing or solidifying the deformable material.

In the context of the present invention, the term flowable material is to be understood as referring to a material which can be poured or pumped such as a liquid or melt. The flowable material may be a molten thermoplastic material such as molten polyethylene. Alternatively the flowable material may be a liquid or mixture of liquids capable of curing.

When the deformable material comprises a flowable material capable of transforming into solid form through curing or solidifying, the compressive strength of the deformable material is the compressive strength of the deformable material when cured or solidified.

Step vii may comprise a sub step of shaping the deformable material such that it fills the second portion and does not extend past the final cross section of the structural insulation profile.

In preferred embodiments of the method according to the second aspect of the present invention the method comprises a pultrusion method and the reinforcing fibres are provided as continuous material.

This is advantageous as a pultrusion method simply and effectively can produce a structural insulation profile.

In the context of the present invention, the term continuous material is to be understood as comprising elongated material of definite length that may be winded or rolled on a roll, or material that is continuously produced as needed.

In the preferred embodiment of the method according to the second aspect of the present invention the method further comprises the steps of:
xi. providing the deformable material as a continuous material, and
xii. providing a pultruder comprising:
   a.a first spool carrying the reinforcing fibres,
   b.a second spool carrying the deformable material,
   c. a collecting and arranging device adapted to receive the reinforcing fibres and the deformable material from the first and second spool and adapted to perform the steps iv and vii,
   d.a matrix material impregnation and shaping device connected to a source of the matrix material and adapted to receive the reinforcing fibres and the deformable material after they have passed through the collecting and arranging device, the matrix material impregnation and shaping device further being adapted to perform the step v,
   e.a curing device adapted to receive the structural insulation profile after it exits the matrix material impregnation and shaping device, the curing device further being adapted to perform step vi, and
   f. a pulling device adapted to engage and pull the structural insulation profile through the pultruder,
or alternatively the steps of:
xii. providing said deformable material as a flowable material, and
xiv. providing a combined pultruder and extruder comprising
   g. a first spool carrying the reinforcing fibres,
   h.a collecting and arranging device adapted to receive the reinforcing fibres from the first spool and adapted to perform the step iv,
   i. a matrix material impregnation and shaping device connected to a source of the matrix material and adapted to receive the reinforcing fibres after they have passed through the collecting and arranging device, the matrix material impregnation and shaping device further being adapted to perform the step v,
   j. a curing device adapted to receive the structural insulation profile after it exits the matrix material impregnation and shaping device, the curing device further being adapted to perform step vi,
   k.a pulling device adapted to engage and pull the structural insulation profile through the combined pultruder and extruder,
   I. a deformable material extrusion device adapted to receive the structural insulation profile and the deformable material and adapted to perform the step vii, and
   m. a further curing device adapted to receive the structural insulation profile after it exits the deformable material extrusion device, the further curing device further being adapted to perform step x.

In the context of the present invention, the term spool is to be understood as also comprising any device capable of holding or containing the continuous material, from which device the continuous material may be retrieved. Thus, a spool may be a circular or polygonal spool onto which the continuous material is winded, but also a box into which the continuous material has been winded or folded.

The collecting and arranging device may for example include a plurality of rollers for directing the continuous material into the desired configuration corresponding to the first portion and, where present, the second portion.

The matrix material impregnation and shaping device typically comprises an enclosure through which the arranged reinforcing fibres, and where present the arranged continuous deformable material, is led. The matrix material is then pumped into the enclosure creating a bath of matrix material for impregnating the reinforcing fibres.

In the context of the present invention, the terms "after they have passed" and "after it exits" is to be understood in the sense that the item referred to has been treated, i.e. that one of the steps of the method has been executed on the item, by the device which the item referred to has passed or exited from.

The curing device and further curing device may include a heat source or a cooling device.

The pulling device may include first and second rotating rollers between which the structural insulation profile, once sufficiently solid to not be damaged by the rollers, is engaged by the rollers and pulled by the rotation of the rollers.

The deformable material extrusion device may be connected to a source of the deformable material. The deformable material extrusion device typically includes a pump or extruder, for supplying the deformable material, and a die connected to the pump or extruder, the die having an aperture aligned with the second portion to deposit the deformable material into the second portion.

In an alternative embodiment of the method according to the second aspect of the present invention the method comprises an extrusion method and the reinforcing fibres are provided as short fibres.

This is advantageous as an extrusion method is simple. In the context of the present invention the term short fibres should be understood in the sense that the fibres referred to have a length sufficiently small that they do not twist or do not clog the die used in the extrusion method. The short fibres may thus have a length of preferably less than 10 mm.

In alternative embodiments of the preferred embodiments of the method according to the second aspect of the present invention the method further comprises the steps of:
xv. providing the deformable material as a continuous material, and,
xvi. providing an extruder comprising:
   n.an extruder enclosure having a first inlet for receiving the matrix material and the reinforcing fibres,
   o.a die connected to the extruder enclosure and having a second inlet for receiving the deformable material, the die further being adapted to perform steps iv and vii,
   p.an extruder screw disposed within the extruder enclosure and adapted to transport the matrix material and the reinforcing fibres towards the die, the extruder screw further being adapted to perform step v, and,
   q.a curing device adapted to receive the structural insulation profile after it exits the die, the curing device further being adapted to perform step vi,
or alternatively the steps of:
xvii. providing the deformable material as a flowable material, and
xviii. providing an extruder comprising:
   r. an extruder enclosure having a first inlet for receiving the matrix material and the reinforcing fibres,
   s. a die connected to the extruder enclosure and being adapted to perform step iv,
   t. an extruder screw disposed within the extruder enclosure and adapted to transport the matrix material towards the die, the extruder screw further being adapted to perform step v, and,
   u.a curing device adapted to receive the structural insulation profile after it exits the die, the curing device further being adapted to perform step vi, and
   v. a deformable material extrusion device adapted to receive the structural insulation profile and the deformable material and adapted to perform the step vii, and
   w. a further curing device adapted to receive the structural insulation profile after it exits the deformable material extrusion device, the further curing device further being adapted to perform step xi.
The extruder enclosure may be a cylindrical cavity. The first inlet may comprise a hopper into which the matrix material and the reinforcing fibres are deposited. The matrix material and the reinforcing fibres are preferably submitted as a mixture in which the matrix material is initially in solid form. During the extrusion process, due to the compression caused by the extruder screw, the matrix material is then melted.

Preferably a thermoplastic material is used as the matrix material in the extruder. The die is connected to the extruder enclosure by being connected to the cavity of the extruder enclosure so that the die may receive the matrix material and the reinforcing fibres from the extruder screw. The die has an outlet through which the matrix material and the reinforcing fibres are extruded. The outlet has an aperture corresponding to at least the first portion and corresponding to to the final cross section of the structural insulation profile or less.

The die may include internal guiding means for guiding the continuous deformable material into the second portion.

The invention and its many advantages will be described in more detail below with reference to the accompanying schematic drawings, which, for the purpose of illustration, show some non-limiting embodiments, and in which:
Fig. 1A shows, in cross section, a structural insulation profile according to a first embodiment of the first aspect of the present invention,
Fig. 1B shows, in perspective view, two structural insulation profiles according to the first embodiment of the first aspect of the present invention attached to first and second identical metal profiles,
Fig. 2A shows, in cross section, a structural insulation profile according to a second embodiment of the first aspect of the present invention,
Fig. 2B shows, in a perspective view, two structural insulation profiles according to the second embodiment of the first aspect of the present invention attached to third to sixth identical metal profiles,
Fig. 3 shows, in horizontal cross section, a glazed element comprising structural insulation profiles according to the second embodiment of the first aspect of the present invention,
Fig. 4A shows, in a perspective view, a first embodiment of a method according to the second aspect of the present invention for producing a structural insulation profile according to the first aspect of the present invention by pultrusion,
Fig. 4B shows, in a perspective view, an alternative embodiment of a method according to the second aspect of the present invention for producing a structural insulation profile according to the first aspect of the present invention by pultrusion followed by extrusion of the deformable material, and,
Fig. 5 shows, in a half section view, a second embodiment of a method according to the second aspect of the present invention for producing the structural insulation profile according to the first aspect of the present invention by extrusion.

In the below description, a superscript Roman numeral added to a reference number indicates that the element referred to has the same or similar function as the element designated the un-superscripted reference number, however, differing in structure.

Further, where useful for discussing a plurality of identical elements, one or more subscript Latin numeral added to a reference number indicates that the element referred to is a further one of the element designated the un-subscripted reference number.

When further embodiments of the invention are shown in the figures, the elements which are new in relation to earlier shown embodiments have new reference numbers, while elements previously shown are referenced as stated above. Elements which are identical in the different embodiments have been given the same reference numerals and no further explanations of these elements will be given.

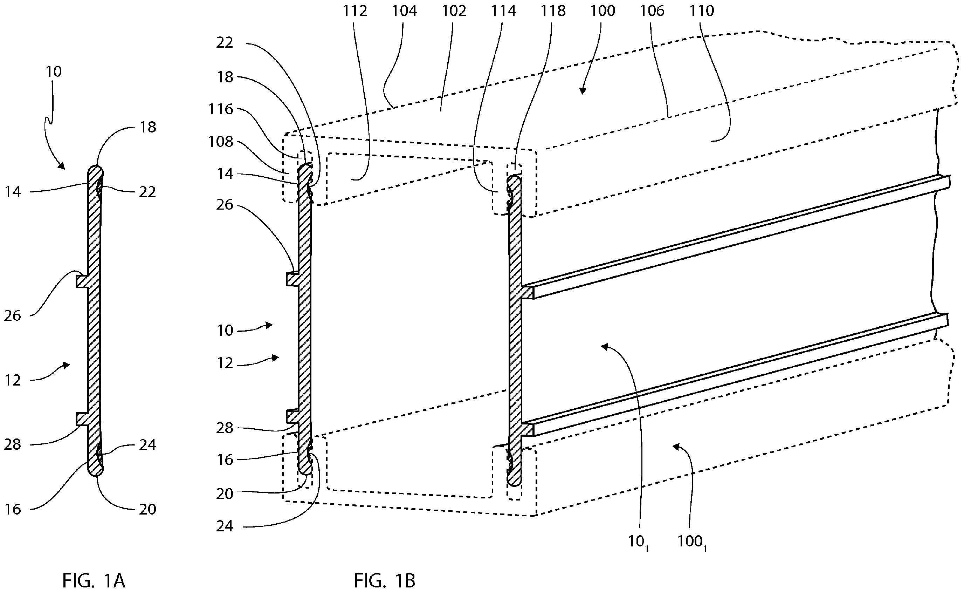

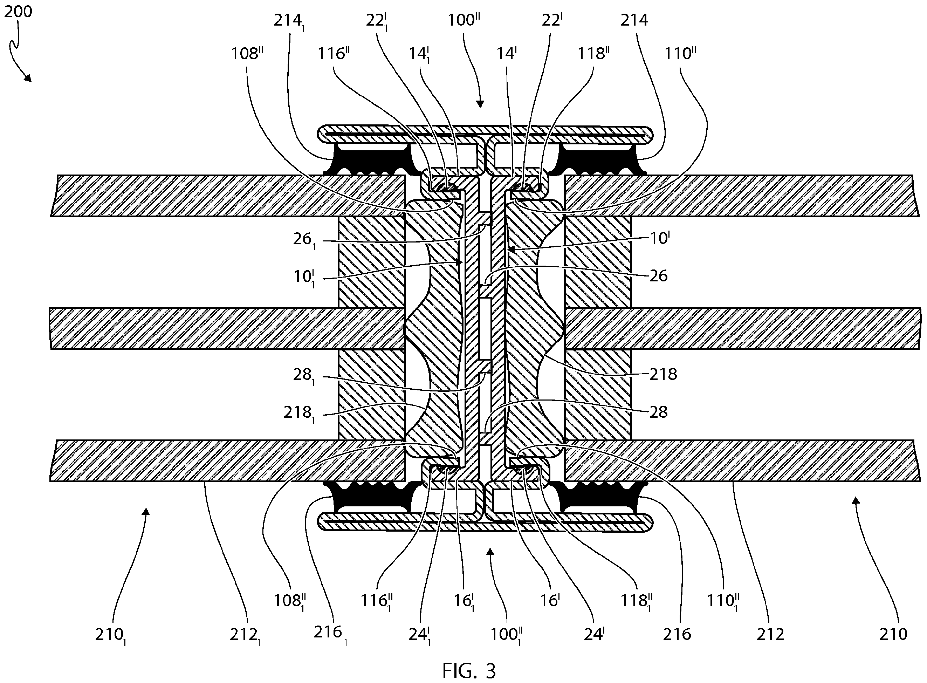

Fig. 1A shows, in cross section, a structural insulation profile 10 according to a first embodiment of the first aspect of the present invention. The structural insulation profile 10 comprises an elongated web 12 having first and second longitudinal side portions 14 and 16 and first and second longitudinal edges 18 and 20. On the first longitudinal side portion 14 is provided a first longitudinal deformation zone 22, and a corresponding second longitudinal deformation zone 24 is provided on the second longitudinal side portion 16. Both longitudinal deformation zones 22 and 24 are provided along a corresponding one of the longitudinal edges 18 and 20 and spaced apart slightly from the longitudinal edges 18 and 20. The elongated web 12 further comprises first and second longitudinal flanges 26 and 28, which can be used as shown in fig. 3 for spacing and attaching the structural insulation profile 10 to other structural components, including a further structural insulation profile as shown in fig. 3. The first and second longitudinal flanges 26 and 28 are positioned at different distances from the centre line of the structural insulation profile 10 such that two lengths of structural insulation profile 10 may be assembled as shown in fig. 3, by inverting one of the structural insulation profiles 10.

The structural insulation profile 10 is made up of a solid matrix material and reinforcing fibres. The deformation zones 22 and 24 comprise deformable material (broad dark hatching in the figures) arranged adjacent the outer surface of the structural insulation profile, the outer surface of the structural insulation profile shown in fig. 1A being the perimeter of the cross section shown in fig. 1A.

Fig. 1B shows, in perspective view, two structural insulation profiles 10 and 10₁ according to the first embodiment of the first aspect of the present invention attached to first and second structural components in the form of first and second identical metal profiles 100 and 100₁. The metal profile 100 includes an elongated main web 102 defining first and second longitudinal edges 104 and 106, at which edges are provided first and second longitudinal side webs 108 and 110 perpendicularly arranged in relation to the elongated main web 102.

The metal profile also comprises first and second longitudinal inner webs 112 and 114 extending parallel to the longitudinal side webs 108 and 110 and spaced apart so as to define first and second longitudinal clamping spaces 116 and 118 between the side webs 108, 110 and the inner webs 112, 114. The longitudinal clamping spaces 116 and 118 are dimensioned so as to provide a close fit with the longitudinal side portions 14 and 16 when a corresponding one of the longitudinal side portions 14 and 16 are inserted into them.

In order to attach the structural insulation profile 10 to the metal profile 100, the longitudinal side portion 14 is firstly inserted into the longitudinal clamping space 116. Then an external force is applied to the longitudinal side web 108 and the first longitudinal inner web 112, the force being directed so as to force the longitudinal side web 108 and the first longitudinal inner web 112 together to close the longitudinal clamping space 116. As the longitudinal clamping space 116 is closed, the longitudinal inner web 112 is bent towards the first longitudinal deformation zone 22 for contacting it and exerting a pressure upon it. The pressure causes a collapse of the deformable material provided in the structural insulation profile 10 at the first longitudinal deformation zone 22 causing a deformation of the first longitudinal deformation zone 22, the deformation resulting in an indentation in the first longitudinal deformation zone 22. As the first longitudinal deformation zone 22 is deformed a part of the longitudinal inner web 112, i.e. the part of the longitudinal inner web 112 facing the first longitudinal deformation zone 22, is forced into the indentation formed in the first longitudinal deformation zone 22. By choosing a suitable material for the metal profile 100, or by suitable treatment during the application of the force or thereafter, the longitudinal inner web 112 of the metal profile 100 remains pressed into the indentation also after the force exerted upon the longitudinal side web 108 and the longitudinal inner web 112 is removed, thereby causing a permanent attachment of the structural insulation profile 10 to the metal profile 100.

The suitable material used for the metal profile 100 may be a material which is plastically deformable such that once bent, the longitudinal inner web 112 and the longitudinal side web 108 stay bent. Alternatively, the metal profile 100 may be made from a shape memory material assuming a position in which the longitudinal clamping spaces 116 and 118 are smaller than the thickness of the longitudinal side portions 14 and 16 upon for example heating or cooling of the metal profile 100.

As a further alternative contemplated within the context of the present invention, the first longitudinal side web 108 and the first longitudinal inner web 112 may be forced together by a rivet or bolt and nut passed through holes in the first longitudinal side web 108 and the first longitudinal inner web 112 and extending across the part of the first longitudinal clamping space 116 which is not occupied by the side portion 14.

The strength of the attachment of the structural insulation profile 10 to the metal profile 100 is dependent on the force needed for expelling the longitudinal inner web 112 from the indentation as it is the interference fit between the longitudinal inner web 112 and the sides of the indentation, i.e. the surrounding parts of the longitudinal side portion 14 which comprise the solid matrix material and any reinforcing fibres present, which provides the attachment of the structural insulation profile 10 to the metal profile 100. The force needed for expelling the longitudinal inner web 112 from the indentation is dependent on the depth, diameter and shape of the indentation, and on the strength of the metal profile resisting the bending out of the longitudinal inner web 112 that is needed for allowing the part of the longitudinal inner web 112 forced into the indentation to leave the indentation.

If desired, the longitudinal inner webs 112 and/or 114 may be provided with a protruding deformation structure (not shown), for example a longitudinal ridge or flange, facing the first longitudinal deformation zone 22. The protruding deformation structure should have a width, and/or contact area to the first longitudinal deformation zone 22, which is smaller than the width, and/or the area, of the first longitudinal deformation zone 22. Thus the pressure, i.e. the force per area, exerted by the protruding deformation structure onto the first longitudinal deformation zone 22, is larger than the pressure exerted by the first longitudinal inner web 112 (in the absence of the protruding deformation structure) for the same force applied to the longitudinal side web 108 and the first longitudinal inner web 112. Thus, the protruding deformation structure collapses the deformable material in the first longitudinal deformation zone 22 more easily. With the protruding deformation structure a smaller force is sufficient, compared to the force needed without the protruding deformation structure, to collapse the deformable material. This is advantageous when the metal profile 100 is stiff and/or strong and not easily bend.

The longitudinal deformation structure may also comprise longitudinally spaced apart protruding pins.

Although the above description with reference to fig. 1B in particular concerns the attachment of the first longitudinal side portion 14 of the first structural insulation profile 10 to the first longitudinal side web 108 and the first longitudinal inner web 112 of the metal profile 100, the construction and procedure is the same, mutatis mutandis, at all four connections between the two structural insulation profiles 10 and 10₁ and the metal profiles 100 and 100₁.

Further, although the deformation zones 22 and 24 are shown on one side of the longitudinal side portions 14 and 16 only, they may obviously be provided on the other side, or both sides, of the longitudinal side portions 14 and 16. The protruding deformation structures, if present, may be provided on any or both of the longitudinal inner webs 112, 144 and/or any or both of the longitudinal side webs 108, 110.

Thus, as is evident from fig. 1, the structural insulation profile 10 is easily and rapidly attached to the metal profile 100.

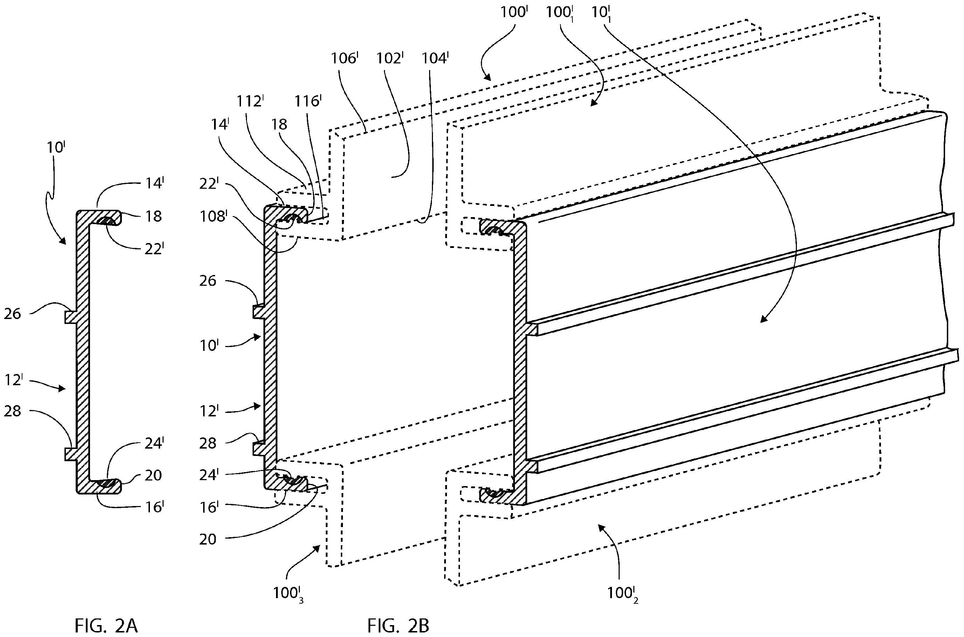

Fig. 2A shows, in a cross section, a structural insulation profile 10^{I} according to a second embodiment of the first aspect of the present invention. The main difference between the structural insulation profile 10^{I} and the structural insulation profile 10 shown in fig. 1 is that the structural insulation profile 10^{I} has modified longitudinal side portions 14^{I} and 16^{I,} which are mounted perpendicular to the modified elongated web 12^{I}.
The modified first and second longitudinal deformation zones 22^{I} and 24^{I} are illustrated as somewhat narrower, and deeper than the deformation zones 22 and 24 of fig. 1.

Fig. 2B shows, in a perspective view, two structural insulation profiles 10^{I} and 10^{I}₁ according to the second embodiment of the first aspect of the present invention attached to third to sixth identical metal profiles 100^{I}, 100^{I}₁, 100^{I}₂, and 100^{I}₃.

The metal profile 100^{I} is similar to the metal profile 100 of fig. 1 halved along the elongated main web 102. In contrast to fig. 1B, the metal profile 100^{I} in fig. 2B is oriented so that the first longitudinal side web 108^{I} faces the first longitudinal deformation zone 22^{I} of the structural insulation profile 10^{I}. The first longitudinal side web 108^{I} and the first longitudinal inner web 112^{I} are however similar, and any of them may be pressed at least partly into the longitudinal deformation zones 22^{I} and 24^{I}.

In order to attach the structural insulation profile 10^{I} to the metal profile 100^{I}, the longitudinal side portion 14^{I} is firstly inserted into the clamping space 116^{I}. Then an external force is applied to the first longitudinal side web 108^{I} and the first longitudinal inner web 112^{I}, the force being directed so as to force the first longitudinal side web 108^{I} and the first longitudinal inner web 112^{I} together to close the clamping space 116^{I}. As the longitudinal clamping space 116^{I} is closed, the first longitudinal side web 108^{I} is bent towards the first longitudinal deformation zone 22^{I} for contacting it and exerting a pressure upon it. The pressure causes a collapse of the deformable fibres provided in the structural insulation profile 10^{I} at the first longitudinal deformation zone 22^{I} causing a deformation of the first longitudinal deformation zone 22^{I}, the deformation resulting in an indentation in the first longitudinal deformation zone 22^{I}. As the first longitudinal deformation zone 22^{I} is deformed, a part of the first longitudinal side web 108^{I}, i.e. the part of the first longitudinal side web 108^{I} facing the first longitudinal deformation zone 22^{I}, is forced into the indentation formed in the first longitudinal deformation zone 22^{I}. By choosing a suitable material for the metal profile 100^{I}, or by suitable treatment during the application of the force or thereafter as described above, the first longitudinal side web 108^{I} of the metal profile 100^{I} remains pressed into the indentation also after the force exerted upon the first longitudinal side web 108^{I} and the first longitudinal inner web 112^{I} is removed, thereby causing a permanent attachment of the structural insulation profile 10^{I} to the metal profile 100^{I}.

As described with reference to fig. 1B, the strength of the attachment is dependent on the force needed for expelling, in this case, the first longitudinal side web 108^{I} from the indentation as it is the interference fit between the first longitudinal side web 108^{I} and the sides of the indentation, i.e. the surrounding parts of the longitudinal side portion 14^{I} that provides the attachment of the structural insulation profile 10^{I} to the metal profile 100^{I}.

Although the above description with reference to fig. 2B in particular concerns the attachment of the first longitudinal side portion 14^{I} of the first structural insulation profile 10^{I} to the first longitudinal side web 108^{I} and the first longitudinal inner web 112^{I} of the metal profile 100^{I}, the construction and procedure is the same, mutatis mutandis, at all four connection between the two structural insulation profiles 10^{I} and 10^{I}₁ and the metal profiles 100^{I}₁ to 100^{I}₃.

Similar to the metal profile of fig. 1, the metal profiles of fig. 2 may comprise protruding deformation structures on the first longitudinal side web 108^{I} and/or the first longitudinal inner web 112^{I}.

The external force applied to the longitudinal side web 108, 108^{I} and the first longitudinal inner web 112, 112^{I}, in figs 1 and 2 may be provided by a clamping device comprising cooperating rollers positioned opposite each other for rolling along the first longitudinal side web 108, 108^{I} and the first longitudinal inner web 112, 112^{I} and suitably spaced apart to provide the required pressure as the first longitudinal side web 108, 108^{I} and the first longitudinal inner web 112, 112^{I} pass between them. The rollers may be held stationary and the metal profile 100, 100^{I} may be moved in relation to the rollers, or vice versa. The structural insulation profiles 10, 10^{I} and the metal profiles 100, 100^{I} are preferably preassembled into a combined structure by inserting the longitudinal side portion 14, 16, 14^{I}, 16^{I} of the structural insulation profile 10, 10^{I} into the longitudinal clamping space 116, 118, 116^{I}, 118^{I} of the metal profile 100, 100^{I} before the external force is applied using the clamping device.

Fig. 3 shows, in a horizontal cross section, a glazed element 200, representing a building component, comprising structural insulation profiles 10^{I} and 10^{I}₁ according to the second embodiment of the first aspect of the present invention.

The glazed element 200 may for example be comprised by a window, a glass facade, or a glass door.

The glazed element 200 comprises first and second metal profiles 100^{II} and 100^{II}₁ connected by the first and second structural insulation profiles 10^{I} and 10^{I}₁.

The metal profile 100" comprises a modified first longitudinal side web 108" and a modified second longitudinal side web 110^{II} which are bent 180 degrees to define modified first and second longitudinal clamping spaces 116" and 118", into which the first longitudinal side portions 14^{I}₁ and 14^{I} of the structural insulation profiles 10^{I}₁ and 10^{I} are inserted. Thus, in the metal profile 100", the longitudinal side webs 108" and 110^{II} correspond to the longitudinal side webs 108 and 110 and the longitudinal inner webs 112 and 114 of fig. 1 for defining the longitudinal clamping spaces 116" and 118^{II}.

Similarly, the metal profile 100^{II}₁ comprises a modified first longitudinal side web 108^{II}₁ and a modified second longitudinal side web 110^{II}₁, which are bent 180 degrees to define modified first and second longitudinal clamping spaces 116^{II}1, and 118^{II}₁, into which the second longitudinal side portions 16^{I}₁ and 16^{I} of the structural insulation profiles 10^{I}₁ and 10^{I} are inserted.

The structural insulation profiles 10^{I}₁ and 10^{I} are spaced apart from each other by the longitudinal flanges 26, 26₁, 28, and 28₁, which longitudinal flanges further provide insulation along the structural insulation profiles 10^{I} and 10^{I}₁ for preventing or at least reducing heat transfer from one of the metal profiles 100" and 100^{II}₁, through the air present in the space between the structural insulation profiles 10^{I} and 10^{I}₁. An adhesive may, if desired to facilitate assembly, be provided on the contact area between the longitudinal flanges 26 and 28 and the structural insulation profile 10^{I}₁, and vice versa.

Glass cassettes 210 and 210₁, each comprising three glass panes, one of which is designated the reference numeral 212, 212₁, are clamped between the metal profiles 100" and 100^{II}₁ via first and second seals 214,214₁ and 216, 216₁. The glass cassettes 210 and 210₁ are positioned in the horizontal direction by distance elements 218 and 218₁ held between the second longitudinal side webs 110^{II} and 110^{II}₁, and the first longitudinal side webs 108^{II} and 108^{II}₁.

In the glazed element 200, the structural insulation profiles 10^{I} and 10^{I}₁ provide both strength and rigidity to the construction. Further, the structural insulation profiles 10^{I} and 10^{I}₁ insulate the metal profile 100" from the metal profile 100^{II}₁ thereby preventing or at least decreasing heat transfer from one side of the glazed element 200 to the other, thus preventing the spread of a fire from one side of the glazed element 200 to the other side of the glazed element 200.

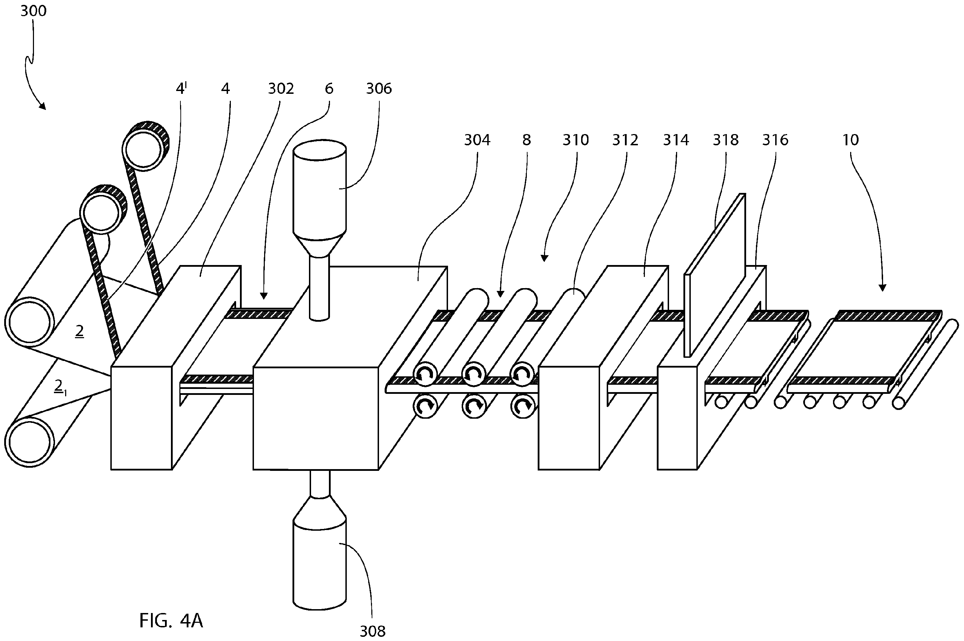

Fig. 4A shows, in a perspective view, a first embodiment of a method according to the second aspect of the present invention for producing a structural insulation profile according to the first aspect of the present invention by pultrusion.

A pultruder, in its entirety designated the reference numeral 300, comprises a collecting and arranging device 302 for collecting and arranging reinforcing fibres in the form of continuous mats 2 and 2₁, and deformable material in the form of continuous woven bands 4 and 4₁, according to the structural insulation profile 10 to be produced. The mats 2, 2₁ and woven bands 4, 4₁ are supplied on spools.

The collecting and arranging device 302 arranges the mats 2, 2₁ and the woven bands 4, 4₁, so that the reinforcing fibres are arranged within a first portion of the final cross section of the structural insulation profile 10 and the such that the woven bands made of the deformable material 4, 4₁, are arranged within a second portion, comprising two partial portions, the second portion being defined by the remainder of the final cross section, the second portion being devoid of the reinforcing fibres and being adjacent to, or exposed at, at least a portion of the outer edge of the final cross section.

The mats 2, 2₁ and woven bands 4, 4₁ are arranged defining a reinforcement structure 6 exiting the collecting and arranging device 302.

The pultruder 300 further comprises a matrix material impregnation and shaping device 304 for receiving the reinforcement structure 6. A thermosetting matrix material in liquid form, preferably polyurethane, is injected into the matrix material impregnation and shaping device 304 through first and second injectors 306 and 308 for impregnating the reinforcement structure 6. The impregnated reinforcement structure is then shaped by a die (not shown) having an aperture corresponding to the final cross section of the structural insulation profile 10. The shaping comprises mainly removal of any surplus matrix material extending beyond the final cross section of the structural insulation profile.

The matrix material impregnation and shaping device 304 further comprises a heater (not shown) associated with the die for initiating the curing of the matrix material. Exiting from the matrix material impregnation and shaping device 304 is an at least partly cured continuous structural insulation profile 8, which is pulled through the pultruder 300 by a pulling device 310 comprised by the pultruder 300 and comprising three pairs of rollers, one of which is designated the reference numeral 312.

The pultruder 300 further comprises a curing device 314 which ensures that the continuous structural insulation profile 8 is fully cured, and a cutting device 316 having a cutting blade 318, which cuts the continuous structural insulation profile 8 into structural insulation profiles 10.

Although the curing device 314 and the matrix material impregnation and shaping device 304 are shown as separate devices in fig. 4A, they may be combined into a single matrix material impregnation, shaping, and curing device.

Although the description of fig. 4A refers to thermosetting matrix material, the method may also be used with a thermoplastic material as matrix material, in which case the curing device 314 should cool the matrix material to cause it to solidify.

The matrix material impregnation and shaping device 304 may also assist the collecting and arranging device 302 in arranging the mats 2, 2₁ and the woven bands of deformable material 4, 4₁.

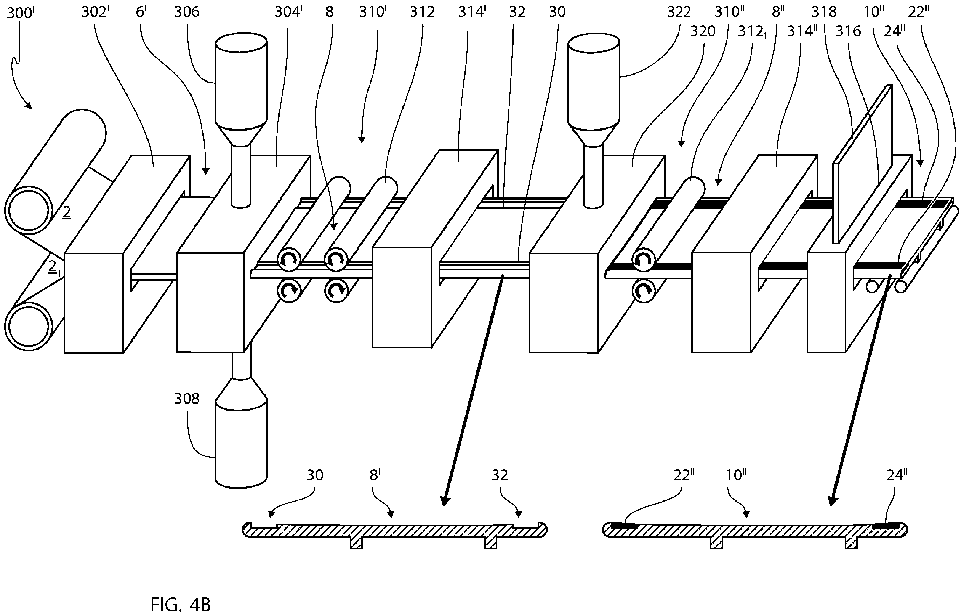

Fig. 4B shows, in a perspective view, an alternative embodiment of a method according to the second aspect of the present invention for producing a structural insulation profile according to the first aspect of the present invention by pultrusion followed by extrusion of the deformable material.

A combined pultruder and extruder, in its entirety designated the reference numeral 300^{I}, comprises a modified collecting and arranging device 302^{I} for collecting and arranging reinforcing fibres in the form of continuous mats 2 and 2₁ according to the structural insulation profile 10 to be produced. The mats 2, 2₁ are supplied on spools.

The collecting and arranging device 302^{I} arranges the mats 2, 2₁ so that the reinforcing fibres are arranged within a first portion of the final cross section of the structural insulation profile 10 and such that a second portion, comprising two rectangular partial portions, is defined. The second portion is defined by the remainder of the final cross section and is devoid of the reinforcing fibres. The second portion is here exposed at at least a portion of the outer edge of the final cross section,

The mats 2, 2₁ are arranged to define a modified reinforcement structure 6^{I} exiting the collecting and arranging device 302^{I}.

A modified matrix material impregnation and shaping device 304^{I} next receives the reinforcement structure 6^{I}. A thermosetting matrix material in liquid form, preferably polyurethane, is injected into the matrix material impregnation and shaping device 304^{I} through first and second injectors 306 and 308 for impregnating the reinforcement structure 6^{I}. The impregnated reinforcement structure is then shaped by a die (not shown) having an aperture corresponding to the first portion of the final cross section of the structural insulation profile 10. The shaping comprises mainly removal of any surplus matrix material extending beyond the first portion of the final cross section of the structural insulation profile.

The matrix material impregnation and shaping device 304^{I} further comprises a heater (not shown) associated with the die for initiating the curing of the matrix material. Exiting from the matrix material impregnation and shaping device 304^{I} is an at least partly cured continuous structural insulation profile blank 8^{I}, comprising first and second longitudinal grooves 30 and 32, which is pulled by a modified pulling device 310^{I} comprising two pairs of rollers, one of which is designated the reference numeral 312.

The combined pultruder and extruder 300^{I} further comprises a modified curing device 314^{I} which ensures that the continuous structural insulation profile blank 8^{I} is sufficiently cured, ideally fully cured, before the continuous structural insulation profile blank 8^{I} enters a deformable material extrusion device 320, in which a deformable material in flowable form, is supplied from a third injector 322 and extruded, via a die (not shown) into the first and second longitudinal grooves 30 and 32. Typically, the deformable material used in the process shown in fig. 4B comprises a thermoplastic material such as polyethylene. If desired, the deformable material may comprise deformable material in the form of thermoplastic fibres.

The continuous structural insulation profile blank 8^{I} exits the deformable material extrusion device 320 as a finished continuous structural insulation profile 8^{II}, in which the deformable material has filled out the longitudinal grooves 30 and 32 to form modified deformation zones 22^{II} and 24^{II} similar to the deformation 22 and 24 of fig 1 but differing in cross section (due to the rectangular cross section of the longitudinal grooves 30 and 32).

The finished continuous structural insulation profile 8^{II} is pulled along by a second modified pulling device 310^{I} having on pair of rollers, one of which is designated the reference numeral 312₁, before entering a second modified curing device 314^{II} in which the deformable material of the finished continuous structural insulation profile 8" is solidified. A cutting device 316 having a cutting blade 318 cuts the finished continuous structural insulation profile 8" into structural insulation profiles 10^{II}.

Depending on whether the deformable material extruded by the deformable material extrusion device 320 is thermosetting or thermoplastic, the second modified curing device 314^{II} should provide heat for setting, or cold for solidifying, respectively.

Although the modified curing device 314^{I} and the modified matrix material impregnation and shaping device 304^{I} are shown as separate devices in fig. 4B, they may be combined into a single modified matrix material impregnation, shaping, and curing device.

Likewise, the second modified curing device 314^{II} and the deformable material extrusion device 320, although shown as separate in fig. 4B, may be combined into a single modified deformable material extrusion and curing device.

Although the description of fig. 4B refers to a thermosetting matrix material, the method may also be used with a thermoplastic material as matrix material, in which case the modified curing device 314^{I} should cool the matrix material to cause it to solidify.

Although the description of fig. 4B refers to extruding a flowable deformable material into the longitudinal grooves 30 and 32, it is contemplated that the deformable material extrusion device 320 could be replaced by a second collecting and arranging device and a second matrix material impregnation and shaping device for firstly arranging deformable material in the form of continuous woven bands in the grooves 30 and 32 and secondly impregnating the continuous woven band with the flowable deformable material in the second matrix material impregnation and shaping device.

Each of the injectors 306, 308, 322 shown in figs. 4A and 4B may comprise a pump.

The matrix material impregnation and shaping device 304^{I} may also assist the collecting and arranging device 302^{I} in arranging the mats 2, 2₁ and thereby the reinforcing fibres.

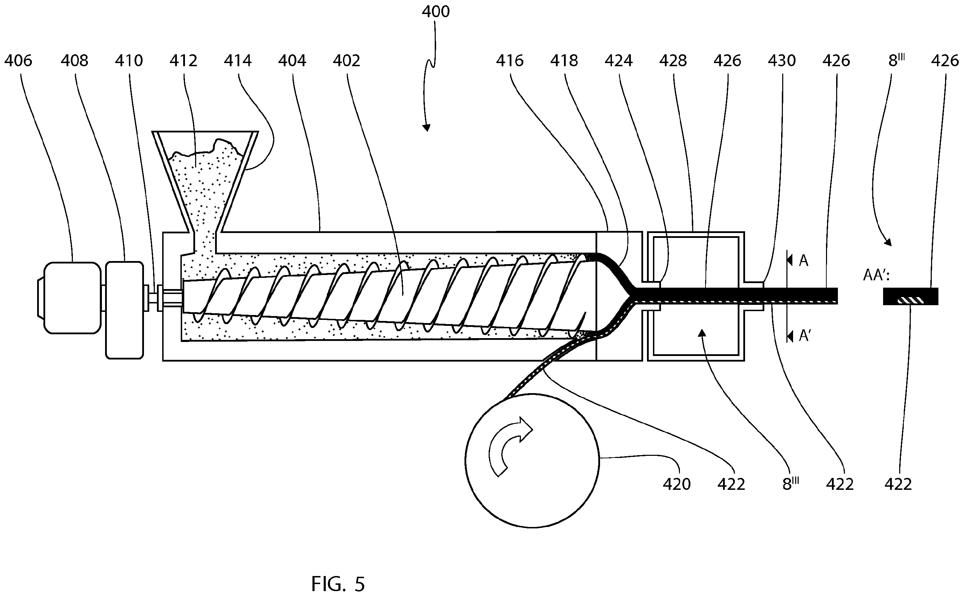

Fig. 5 shows, in a half section view, a second embodiment of a method according to the second aspect of the present invention for producing the structural insulation profile according to the first aspect of the present invention by extrusion.

A screw extruder, in its entirety designated the reference numeral 400, comprises a screw conveyor 402 rotating within an extruder enclosure 404 and driven by a motor 406 via gear 408 and axle 410. A mix of matrix material in solid form and fibres, for example glass fibres 412 enters the enclosure via a hopper 414 and is conveyed under increasing pressure and corresponding increasing temperature along the screw conveyor 402 towards die 416. The increasing temperature causes a melting of the matrix material, with concomitant onset of cure if the matrix material is a thermosetting resin. The die 416 comprises a bowl shaped recess 418, into which the downstream end of the screw conveyor 402 projects, the recess 418 and the screw conveyor 402 defining an annular channel of decreasing diameter. Next to the die 416 a spool 420 of deformable material in the form of a deformable fibre band 422 is provided. The deformable fibre band 422 is led into the extruder enclosure 404 and into the annular channel in which the deformable fibre band 422 is entrained with the mix of matrix material and reinforcing fibres 412 and led along the outer wall of the annular channel towards the nozzle 424. At the nozzle 424, the mixture of matrix material and reinforcing fibres 412 has been fully mixed into a combined mixture 426 which together with the deformable fibre band 422 passes through a heating chamber 428, representing a curing device, and exits through a second nozzle 430 as a continuous structural insulation profile 8^{I}, in which the deformable fibre band 422 is arranged along the lower side thereof close to the lower surface, and surrounded by the cured or curing combined mixture 426 as seen in the section on AA'. By comparison with figs 1 to 3, it can be seen that by clamping the continuous structural insulation profile 8^{III} over the deformable fibre band 422, the deformable fibre band 422 yields to create an indentation into which part of the metal profiles of figs 1-3 may protrude to attach the metal profile to the structural insulation profile 8^{III}.

It should be noted that, for illustrative purposes, the cross section of the continuous structural insulation profile 8^{III} shown in fig. 5 has a very simple shape when compared with the cross section of the structural insulation profiles 10-10^{II}, however by providing a suitable die 416 having a nozzle 424 with a suitably shaped aperture, structural insulation profiles with more elaborate cross section, such as those of the structural insulation profiles shown in figs 1-4, may be produced. If necessary, a further spool of deformable fibre band 420 may be provided if more than one deformation zone is desired.

The method shown in fig. 5 utilizes a thermosetting matrix material, however, the method may also be used with a thermoplastic matrix material in which case the heating chamber 428 should be replaced with a cooling chamber for assisting cooling and solidifying of the matrix material.

The method described above with reference to fig. 5 may also be performed in two steps in analogy to the method described with reference to fig. 4B. Thus, in an alternative embodiment of the method described with reference to fig. 5 (not shown), the method includes first forming a continuous structural insulation profile blank in the extruder 400 by using a modified die which forms a groove in the extruded continuous structural insulation profile and without adding the deformable fibre band 422. After the continuous structural insulation profile blank has been extruded a deformable material is extruded into the groove and solidified or cured to form the structural insulation profile. In order to extrude the deformable material into the groove a deformable material extrusion device similar to deformable material extrusion device 320 of fig. 4B may be used.

If desired, the deformable material may comprise deformable material in the form of thermoplastic fibres.

Instead of a deformable material extrusion device and as described with reference to fig 4B, a collecting and arranging device and a matrix material impregnation and shaping device may be used to arrange deformable material in the form of a continuous woven band in the groove and impregnate the continuous woven band with the flowable deformable material.

**List of parts with reference to the figures:**

| |
|---|
| 2. Reinforcing fibres in the form of a mat. |
| 4. Deformable material in the form of a woven band |
| 6. Reinforcement structure |
| 8. Continuous structural insulation profile |
| 10. Structural insulation profile |
| 12. Elongated web |
| 14. First longitudinal side portion |
| 16. Second longitudinal side portion |
| 18. First longitudinal edge |
| 20. Second longitudinal edge |
| 22. First longitudinal deformation zone |
| 24. Second lonqitudinal deformation zone |
| 26. First longitudinal flange |
| 28. Second lonqitudinal flange |
| 30. First longitudinal groove |
| 32. Second longitudinal groove |
| 100. Metal profile |
| 102. Elongated main web |
| 104. First longitudinal edge |
| 106. Second longitudinal edge |
| 108. First longitudinal side web |
| 110. Second longitudinal side web |
| 112. First longitudinal inner web |
| 114. Second longitudinal inner web |
| 116. First longitudinal clamping space |
| 118. Second longitudinal clamping space |
| 200. Glazed element |
| 210. Glass casette |
| 212. Glass pane |
| 214. First seal |
| 216. Second seal |
| 218. Distance element |
| 300. Pultruder |
| 302. Collecting and arranging device |
| 304. Matrix material impregnation and shaping device |
| 306. First injector |
| 308. Second injector |
| 310. Pulling device |
| 312. Roller |
| 314. Curing device |
| 316. Cutting device |
| 318. Cutting blade |
| 320. Deformable material extrusion device |
| 322. Third injector |
| 400. Extruder |
| 402. Screw conveyor |
| 404. Extruder enclosure |
| 406. Motor |
| 408. Gear |
| 410. Axle |
| 412. Mix of matrix material and reinforcing fibres |
| 414. Hopper |
| 416. Die |
| 418. Recess |
| 420. Spool |
| 422. Deformable fibre band |
| 424. Nozzle |
| 426. Combined mixture |
| 428. Heating chamber |
| 430. Second nozzle |

## Claims

1. A structural component (100) provided with cooperating structures defining a clamping space (116) and a structural insulation profile (10) having a cross section, said structural insulation profile (10) comprising:
a solid matrix material having an outer surface,
reinforcing fibres (2) embedded in said solid matrix material, and
a deformable material (4) being compatible with said matrix material and having a compressive strength which is less than the compressive strength of said solid matrix material and said reinforcing fibres,
said deformable material (4) being at least partially embedded in said solid matrix material adjacent to, or exposed at at least a portion of said outer surface for defining a deformation zone (22),
said structural insulation profile (10) including said deformation zone (22) being positioned in said clamping space 116) and said cooperating structures being forced together clamping said structural insulation profile (10) and deforming said deformation zone (22) forming an indentation.

2. The structural component (100) and the structural insulation profile (10) according to claim 1, said structural insulation profile comprising a generally planar elongated web (12) having two opposite generally planar longitudinal side portions (14, 16) running the length of the elongated web (12), each side portion having a longitudinal edge (18, 20), said deformable material (4) being arranged along said longitudinal edges (18, 20).

3. The structural component (100) and the structural insulation profile (10) according to claim 2, said deformable material (4) being arranged on said longitudinal edges (18, 20),

4. The structural component (100) and the structural insulation profile (10) according to claim 2, said deformable material (4) being arranged adjacent said longitudinal edges (18, 20).

5. The structural component (100) and the structural insulation profile (10) according to any of the claims 2-4, said side portions (14, 16) being angled in relation to said elongated web (12).

6. The structural component (100) and the structural insulation profile (10) according to any of the claims 3-4, said elongated web (12) comprising a longitudinal flange (26) for arranging said structural insulation profile (10) opposite to, and spaced apart from, a further structural insulation profile (10₁).

7. The structural component (100) and the structural insulation profile (10) according to any of the claims 2-6, said solid matrix material comprising polyurethane.

8. The structural component (100) and the structural insulation profile (10) according to any preceding claim, said deformable material (4) comprising thermoplastic fibres in the form of rovings, texturized rovings, a flat braid, or spun bond, or alternatively said deformable material (4) comprising a polymeric material.

9. A building component (200) comprising the structural component (100) and the structural insulation profile (10) according to any of the claims 1-8.

10. A method of producing a structural component (100) and a structural insulation profile (10) according to any of the claims 1-8, the method comprising the steps of:
i. providing a matrix material capable of being transformed into a solid form through curing or solidifying,
ii. providing reinforcing fibres (2),
iii. providing a deformable material (4) having a compressive strength less than the compressive strength of said matrix material in said solid form, and less than the compressive strength of said reinforcing fibres (2), said deformable material (4) being compatible with said matrix material,
iv. arranging said reinforcing fibres (2) within a first portion of the final cross section of said structural insulation profile (10) such that the remainder of said final cross section defines a second portion of said final cross section, said second portion being devoid of said reinforcing fibres and being adjacent to, or exposed at, at least a portion of the outer edge of said final cross section,
v. impregnating said reinforcing fibres (2) with said matrix material,
vi. curing or solidifying said matrix material,
vii. arranging said deformable material (4) within said second portion to define said deformation zone (22),
viii. providing said structural component with cooperating structures defining a clamping space (116), and
ix. placing said structural insulation profile (10) so that part of it, including the deformation zone (22), is positioned in said clamping space (116), said cooperating structures being forced together to clamp the structural insulation profile (10) and deform the deformation zone (22) to form an indentation.

11. The method according to claim 10, said deformable material comprising a solid material and step vii being performed prior to step vi, preferably prior to step v, and most preferably concurrent with step iv.

12. The method according to claim 10, said deformable material (4) comprising a flowable material capable of transforming into solid form through curing or solidifying, step vii being performed after step vi, the method further comprising the step of:
x. curing or solidifying said deformable material (4).

13. The method according to claim any of the claims 10-12, said method comprising a pultrusion method and said reinforcing fibres (2) being provided as continuous material.

14. The method according to claim 13 further comprising the steps of:
xi. providing said deformable material (4) as a continuous material, and
xii. Providing a pultruder (300) comprising:
a. a first spool carrying said reinforcing fibres (2),
b. a second spool carrying said deformable material (4),
c. a collecting and arranging device (302) adapted to receive said reinforcing fibres and said deformable material from said first and second spool and adapted to perform the steps iv and vii,
d.a matrix material impregnation and shaping device (304) connected to a source of said matrix material (306) and adapted to receive said reinforcing fibres (2) and said deformable material (4) after they have passed through said collecting and arranging device (302), said matrix material impregnation and shaping device (304) further being adapted to perform the step v,
e.a curing device (314) adapted to receive said structural insulation profile (10) after it exits said matrix material impregnation and shaping device (304), said curing device (314) further being adapted to perform step vi, and,
f. a pulling device (310) adapted to engage and pull said structural insulation profile (10) through said pultruder,
or alternatively the steps of:
xiii. providing said deformable material (4) as a flowable material, and
xiv. providing a combined pultruder and extruder (300^{I}) comprising
g. a first spool carrying said reinforcing fibres (2),
h.a collecting and arranging device (302^{I}) adapted to receive said reinforcing fibres from said first spool and adapted to perform the step iv,
i. a matrix material impregnation and shaping device (304^{I}) connected to a source of said matrix material (306) and adapted to receive said reinforcing fibres (2) after they have passed through said collecting and arranging device (302^{I}), said matrix material impregnation and shaping device (304^{I}) further being adapted to perform the step v,
j. a curing device (314^{I}) adapted to receive said structural insulation profile (8^{I}) after it exits said matrix material impregnation and shaping device (304^{I}), said curing device (314^{I}) further being adapted to perform step vi,
k. a pulling device (310^{I}) adapted to engage and pull said structural insulation profile (8^{I}) through said combined pultruder and extruder (300^{I}),
l. a deformable material extrusion device (320) adapted to receive said structural insulation profile (8^{I}) and said deformable material and adapted to perform the step vii, and,
m. a further curing device (314^{II}) adapted to receive said structural insulation profile (8^{II}) after it exits said deformable material extrusion device (320), said further curing device (314^{II}) further being adapted to perform step x.

15. The method according to any of the claims 10-12, said method comprising an extrusion method and said reinforcing fibres being provided as short fibres.

16. The method according to claim 15 further comprising the steps of
xv. providing said deformable material (4) as a continuous material, and,
xvi. providing an extruder (400) comprising:
n.an extruder enclosure (404) having a first inlet (414) for receiving said matrix material and said reinforcing fibres (412),
o.a die (416) connected to said extruder enclosure (404) and having a second inlet for receiving said deformable material (422), said die further being adapted to perform steps iv and vii,
p. an extruder screw (402) disposed within said extruder enclosure (404) and adapted to transport said matrix material and said reinforcing fibres (412) towards said die (416), said extruder screw (402) further being adapted to perform step v, and,
q.a curing device (428) adapted to receive said structural insulation profile (8^{III}) after it exits said die (416), said curing device (428) further being adapted to perform step vi,
or alternatively the steps of:
xvii. providing said deformable material (4) as a flowable material, and
xviii. providing a extruder (400) comprising:
r. an extruder enclosure (404) having a first inlet (414) for receiving said matrix material and said reinforcing fibres (412),
s. a die (416) connected to said extruder enclosure (404) and being adapted to perform step iv and vi,
t. an extruder screw (402) disposed within said extruder enclosure (404) and adapted to transport said matrix material towards said die (416), said extruder screw (402) further being adapted to perform step v, and,
u.a curing device (428) adapted to receive said structural insulation profile (8^{III}) after it exits said die (416), said curing device (428) being adapted to perform step vii, and
v. a deformable material extrusion device (320) adapted to receive said structural insulation profile (8^{I}) and said deformable material and adapted to perform the step vii, and
w. a further curing device (314^{II}) adapted to receive said structural insulation profile (8^{III}) after it exits said deformable material extrusion device (320), said further curing device (314^{II}) further being adapted to perform step xi.

## Patentansprüche

1. Ein strukturelles Element (100) mit zusammenwirkenden Strukturen versehen, die einen Klemmraum (116) und ein strukturelles, mit einem Querschnitt versehendes Isolationsprofil (10) abstecken, wobei das strukturelle Isolationsprofil (10) umfasst:
ein festes Matrixmaterial mit einer äusseren Oberfläche,
in das feste Matrixmaterial eingebettete Verstärkungsfasern (2), und
ein verformbares Material, (4) das mit dem Matrixmaterial vereinbar ist, und das eine Druckfestigkeit hat, die geringer ist als die Druckfestigkeit des festen Matrixmaterials und der Verstärkungsfasern,
wobei das verformbare Material (4) wenigstens teilweise in das feste Matrixmaterial eingebettet ist neben, oder exponiert auf wenigstens einem Abschnitt der äusseren Oberfläche, so dass eine Verformungszone (22) abgesteckt wird,
wobei das strukturelle Isolationsprofil (10) die Verformungszone (22) umfasst, die sich in dem Klemmraum (116) befindet, und die zusammenwirkenden Strukturen gegeneinander gezwungen werden, indem sie das strukturelle Isolationsprofil (10) klemmen und die Verformungszone (22) in eine Vertiefung verformt.

2. Das strukturelle Element (100) und das strukturelle Isolationsprofil (10) nach Anspruch 1, wobei das strukturelle Isolationsprofil ein grundsätzlich ebenes verlängertes Web (12) mit zwei gegenüberliegenden grundsätzlich ebenen längslaufenden Seitenabschnitten (14, 16), die über die Länge des verlängerten Webs (12) laufen, umfasst, wobei jeder Seitenabschnitt einen längslaufenden Rand (18, 20) hat, wobei das verformbare Material (4) entlang den längslaufenden Rändern (18, 20) angeordnet ist.

3. Das strukturelle Element (100) und das strukturelle Isolationsprofil (10) nach Anspruch 2, wobei das verformbare Material (4) auf den längslaufenden Rändern (18, 20) angeordnet ist.

4. Das strukturelle Element (100) und das strukturelle Isolationsprofil (10) nach Anspruch 2, wobei das verformbare Material (4) neben den längslaufenden Rändern (18, 20) angeordnet ist.

5. Das strukturelle Element (100) und das strukturelle Isolationsprofil (10) nach einem jeglichen der Ansprüche 2 bis 4, wobei die Seitenabschnitte (14, 16) in Beziehung zu dem verlängerten Web (12) angewinkelt sind.

6. Das strukturelle Element (100) und das strukturelle Isolationsprofil (10) nach einem jeglichen der Ansprüche 3 bis 4, wobei das verlängerte Web (12) einen längslaufenden Flansch (26) umfasst für Anordnen des strukturellen Isolationsprofils (10) gegenüber und räumlich entfernt von einem weiteren strukturellen Isolationsprofil (10₁).

7. Das strukturelle Element (100) und das strukturelle Isolationsprofil (10) nach einem jeglichen der Ansprüche 2 bis 6, wobei das feste Matrixmaterial Polyurethan umfasst.

8. Das strukturelle Element (100) und das strukturelle Isolationsprofil (10) nach einem jeglichen der vorherstehenden Ansprüche, wobei das verformbare Material (4) thermoplastische Fasern umfasst in Form von Rovings, texturierten Rovings, einem Flachgeflecht, oder Spinnvlies, oder anderenfalls wobei das verformbare Material (4) ein Polymermaterial umfasst.

9. Ein Bauelement (200), das das strukturelle Element (100) und das strukturelle Isolationsprofil (10) nach einem der Ansprüche 1 bis 8 umfasst.

10. Ein Verfahren zur Herstellung eines strukturellen Elements (100) und eines strukturellen Isolationsprofils (10) nach einem jeglichen der Ansprüche 1-8, wobei das Verfahren folgende Schritte umfasst:
i. Versorgen eines Matrixmaterials, das sich durch Aushärten oder Verfestigen transformieren lassen kann in eine feste Form,
ii. Versorgen von Verstärkungsfasern (2),
iii. Versorgen eines verformbaren Materials (4) mit einer Druckfestigkeit, die geringer ist als die Druckfestigkeit des Matrixmaterials in der festen Form, und geringer als die Druckfestigkeit der Verstärkungsfasern (2), wobei das verformbare Material (4) mit dem Matrixmaterial vereinbar ist,
iv. Anordnen der Verstärkungsfasern (2) innerhalb eines ersten Abschnitts des letzten Querschnitts des strukturellen Isolationsprofils (10), so dass der Rest des letzten Querschnitts einen zweiten Abschnitt des letzten Querschnitts absteckt, wobei der zweite Abschnitt frei von den Verstärkungsfasern ist und neben oder exponiert auf wenigstens einem Abschnitt des äusseren Rands des letzten Querschnitts liegt,
v. Imprägnieren von den Verstärkungsfasern (2) mit dem Matrixmaterial,
vi. Aushärten oder Verfestigen des Matrixmaterials,
vii. Anordnen des verformbaren Materials (4) innerhalb des zweiten Abschnitts um die Verformungszone (22) abzustecken,
viii. Versorgen des strukturellen Elements mit zusammenwirkenden Strukturen, die einen Klemmraum (116) abstecken, und
ix. Platzieren des strukturellen Isolationsprofils (10) so dass ein Teil davon, einschliesslich der Verformungszone (22), innerhalb des Klemmraums (116) platziert ist, wobei die zusammenwirkenden Strukturen gegeneinander gezwungen werden und das strukturelle Isolationsprofil (10) klemmen und die Verformungszone (22) in eine Vertiefung verformen.

11. Verfahren nach Anspruch 10, wobei das verformbare Material ein festes Material umfasst, und Schritt vii vor Schritt vi ausgeführt wird, bevorzugt vor Schritt v, und besonders bevorzugt gleichzeitig mit Schritt iv.

12. Verfahren nach Anspruch 10, wobei das verformbare Material (4) ein fliessfähiges Material umfasst, das sich durch Aushärten oder Verfestigen transformieren lassen kann in eine feste Form, wobei Schritt vii nach Schritt vi ausgeführt wird, und das Verfahren ausserdem den folgenden Schritt umfasst:
x. Aushärten oder Verfestigen des verformbaren Materials (4).

13. Verfahren nach einem jeglichen der Ansprüche 10-12, wobei das Verfahren ein Strangziehverfahren umfasst und die Verstärkungsfasern (2) als fortlaufendes Material versorgt werden.

14. Verfahren nach Anspruch 13, das ausserdem folgende Schritte umfasst:
xi. Versorgen des verformbaren Materials (4) als fortlaufendes Material, und
xii. Versorgen eines Strangziehers (300) umfassend:
a.eine erste Spule, die die Verstärkungsfasern (2) trägt,
b.eine zweite Spule, die das verformbare Material (4) trägt,
c. eine Sammel- und Anordnungsvorrichtung (302), die für die Annahme der Verstärkungsfasern und des verformbaren Materials von der ersten und zweiten Spule eingestellt ist, sowie auch für die Ausführung der Schritte iv und vii,
d.eine Matrixmaterialimprägnierungs- und Formungsvorrichtung (304), die zu einer Quelle vom Matrixmaterial (306) verbunden ist und dazu eingestellt ist, die Verstärkungsfasern (2) und das verformbare Material (4) anzunehmen, nachdem dass sie durch die Sammel- und Anordnungsvorrichtung (302) durchpassiert sind, wobei die Matrixmaterialimprägnierungs- und Formungsvorrichtung (304) ausserdem dazu eingestellt ist, den Schritt v auszuführen,
e.eine Aushärtungsvorrichtung (314), die dazu eingestellt ist, das strukturelle Isolationsprofil (10) anzunehmen, nachdem es die Matrixmaterialimprägnierungs- und Formungsvorrichtung (304) verlässt, wobei die Aushärtungsvorrichtung (314) ausserdem dazu eingestellt ist, den Schritt vi auszuführen, und,
f. eine Ziehvorrichtung (310), die dazu eingestellt ist das strukturelle Isolationsprofil (10) zu erfassen und durch den Strangzieher zu ziehen,
oder anderenfalls folgende Schritte:
xiii. Versorgen des verformbaren Materials (4) als ein fliessfähiges Material, und
xiv. Versorgen einer kombinierten Strangzieher und Strangpresse (300^{I}) umfassend
g.eine erste Spule, die die Verstärkungsfasern (2) trägt,
h.eine Sammel- und Anordnungsvorrichtung (302'), die für die Annahme der Verstärkungsfasern von der ersten Spule und für die Ausführung von Schritt iv eingestellt ist,
i. eine Matrixmaterialimprägnierungs- und Formungsvorrichtung (304'), die zu einer Quelle vom Matrixmaterial (306) verbunden ist und dazu eingestellt ist, die Verstärkungsfasern (2) anzunehmen, nachdem sie durch die Sammel- und Anordnungsvorrichtung (302') durchpassiert sind, wobei die Matrixmaterialimprägnierungs- und Formungsvorrichtung (304') ausserdem dazu eingestellt ist, den Schritt v auszuführen,
j. eine Aushärtungsvorrichtung (314'), die dazu eingestellt ist, das strukturelle Isolationsprofil (8') anzunehmen, nachdem es die Matrixmaterialimprägnierungs- und Formungsvorrichtung (304') verlässt, wobei die Aushärtungsvorrichtung (314') ausserdem dazu eingestellt ist, den Schritt vi auszuführen,
k. eine Ziehvorrichtung (310'), die dazu eingestellt ist das strukturelle Isolationsprofil (8') zu erfassen und durch die kombinierte Strangzieher und Strangpresse (300^{I}) zu ziehen,
l. eine Strangpressvorrichtung (320) für verformbares Material, die dazu eingestellt ist, das strukturelle Isolationsprofil (8^{I}) und das verformbares Material anzunehmen, sowie dazu eingestellt ist, den Schritt vii auszuführen, und,
m. eine weitere Aushärtungsvorrichtung (314^{II}), die dazu eingestellt ist, das strukturelle Isolationsprofil (8^{II}) anzunehmen nachdem es die Strangpressvorrichtung (320) für verformbares Material verlässt, wobei die weitere Aushärtungsvorrichtung (314^{II}) ausserdem dazu eingestellt ist, den Schritt x auszuführen.

15. Verfahren nach einem jeglichen der Ansprüche 10-12, wobei das Verfahren ein Strangpressverfahren umfasst, und wobei die Verstärkungsfasern als kurze Fasern vorgesehen sind.

16. Verfahren nach Anspruch 15, das ausserdem folgende Schritte umfasst
xv. Versorgen des verformbaren Materials (4) als ein fortlaufendes Material, und,
xvi. Versorgen einer Strangpresse (400) umfassend:
n.ein Strangpressgehäuse (404) mit einem ersten Einlass (414) für die Annahme von dem Matrixmaterial und den Verstärkungsfasern (412),
o.eine Austrittsdüse (416), die zu der Strangpressgehäuse (404) verbunden ist und einen zweiten Einlass für die Annahme des verformbaren Materials (422) hat, wobei die Austrittsdüse ausserdem dazu eingestellt ist, die Schritte iv und vii auszuführen,
p.eine Strangpressschraube (402) im Strangpressgehäuse (404) angeordnet und dazu eingestellt, das Matrixmaterial und die Verstärkungsfasern (412) gegen die Austrittsdüse (416) zu transportieren, wobei die Strangpressschraube (402) ausserdem dazu eingestellt ist, den Schritt v auszuführen, und,
q.eine Aushärtungsvorrichtung (428), die dazu eingestellt is, das strukturelle Isolationsprofil (8^{III}) anzunehmen nachdem es die Austrittsdüse (416) verlässt, wobei die Aushärtungsvorrichtung (428) ausserdem dazu eingestellt ist, den Schritt vi auszuführen,
oder anderenfalls folgende Schritte:
xvii. Versorgen des verformbaren Materials (4) als ein fliessfähiges Material, und
xviii. Versorgen einer Strangpresse (400) umfassend:
r. ein Strangpressgehäuse (404) mit einem ersten Einlass (414) für die Annahme des Matrixmaterials und der Verstärkungsfasern (412),
s. eine Austrittsdüse (416), die mit dem Strangpressgehäuse (404) verbunden ist und dazu eingestellt ist, Schritt iv und vi auszuführen,
t. eine Strangpresschraube (402), die im Strangpressgehäuse (404) angeordnet ist und dazu eingestellt ist, das Matrixmaterial gegen die Austrittsdüse (416) zu transportieren, wobei die Strangpresschraube (402) ausserdem dazu eingestellt ist, den Schritt v auszuführen, und
u.eine Aushärtungsvorrichtung (428), die dazu eingestellt ist, das strukturelle Isolationsprofil (8^{III}) anzunehmen, nachdem es die Austrittsdüse (416) verlässt, wobei die Aushärtungsvorrichtung (428) dazu eingestellt ist, den Schritt vii auszuführen, und
v. ein Strangpressvorrichtung (320) für verformbares Material, die dazu eingestellt ist, das strukturelle Isolationsprofil (8^{I}) und das verformbare Material anzunehmen und dazu eingestellt ist, den Schritt vii auszuführen, und
w. eine weitere Aushärtungsvorrichtung (314^{II}), die dazu eingestellt ist, das strukturelle Isolationsprofil (8^{III}) anzunehmen, nachdem es die Strangpressvorrichtung (320) für verformbares Material verlässt, wobei die weitere Aushärtungsvorrichtung (314^{II}) ausserdem dazu eingestellt ist, den Schritt xi auszuführen.

## Revendications

1. Composant structurel (100) fourni avec des structures coopérantes définissant un espace de serrage (116) et un profilé d'isolation structurel (10) ayant une section transversale, ledit profilé d'isolation structurel (10) comprenant:
un matériau de matrice solide ayant une surface extérieure,
des fibres de renforcement (2) intégrés dans ledit matériau de matrice solide, et
un matériau deformable (4) étant compatible avec ledit matériau de matrice solide et ayant une résistance en compression qui est inférieure à la résistance en compression dudit matériau de matrice solide et desdites fibres de renforcement,
ledit matériau déformable (4) étant au moins partiellement intégré dans ledit matériau de matrice solide adjacent à ou exposé à au moins une partie de ladite surface extérieure pour définir une zone de déformation (22),
ledit profilé i d'isolation structurel (10) incluant ladite zone de déformation (22) étant positionnée dans ledit espace de serrage (116) et lesdites structures coopérantes étant poussées ensemble en serrant ledit profilé d'isolation structurel (10) et en déformant ladite zone de déformation (22) formant une encoche.

2. Composant structurel (100) et profilé d'isolation structurel (10) selon la revendication 1, ledit profilé d'isolation structurel comprenant un treillis généralement allongé et planaire (12) ayant deux parties latérales longitudinales opposées étant généralement planaires (14, 16) qui s'étendent le long de la longueur du treillis allongé (12), chaque partie latérale ayant un bord longitudinal (18, 20), ledit matériau déformable (4) étant agencé le long desdits bords longitudinaux (18, 20).

3. Composant structurel (100) et profilé d'isolation structurel (10) selon la revendication 2, ledit matériau deformable (4) étant agencé sur lesdits bords longitudinaux (18, 20).

4. Composant structurel (100) et profilé d'isolation structurel (10) selon la revendication 2, ledit matériau deformable (4) étant agencé adjacent lesdits bords longitudinaux (18, 20).

5. Composant structurel (100) et profilé d'isolation structurel (10) selon l'une quelconque des revendications 2 à 4, lesdites parties latérales (14, 16) étant inclinées par rapport audit treillis allongé (12).

6. Composant structurel (100) et profilé d'isolation structurel (10) selon l'une quelconque des revendications 3 à 4, ledit treillis allongé (12) comprenant une bride longitudinale (26) pour agencer ledit profilé isolant structurel (10) opposé à un profilé d'isolation structurel ultérieur (10₁) et écarté de celui-ci.

7. Composant structurel (100) et profilé d'isolation structurel (10) selon l'une quelconque des revendications 2 à 6, ledit matériau de matrice solide comprenant du polyuréthane.

8. Composant structurel (100) et profilé isolant structurel (10) selon l'une quelconque des revendications précédentes, ledit matériau deformable (4) comprenant des fibres thermoplastiques en forme de mèches, des mèches texturées, une tresse plate ou non-tissée, ou alternativement, ledit matériau deformable (4) comprenant un matériau polymère.

9. Composant de construction (200) comprenant le composant structurel (100) et le profilé isolant structurel (10) selon l'une quelconque des revendications 1 à 8.

10. Procédé de production d'un composant structurel (100) et un profilé d'isolation structurel (10) selon l'une quelconque des revendications 1 à 8, le procédé comprenant les étapes de:
i. la fourniture d'un matériau de matrice capable d'être transformé en une forme solide par durcissement ou solidification,
ii. la fourniture de fibres de renforcement (2),
iii. la fourniture d'un matériau deformable (4) ayant une résistance en compression qui est inférieure à la résistance en compression dudit matériau de matrice dans ladite forme solide, et inférieure à la résistance en compression dudit matériau desdites fibres de renforcement (2), ledit matériau deformable (4) étant compatible avec ledit matériau de matrice,
iv. l'agencement desdites fibres de renforcement (2) à l'intérieur d'une première partie de la section transversale finale dudit profilé isolant structurel (10), de manière à ce que le restant de ladite section transversale finale définit une deuxième partie de ladite section transversale finale, ladite deuxième partie étant dépourvue desdites fibres de renforcement et étant adjacente à ou exposée à au moins une partie du bord extérieur de ladite section transversale finale,
v. l'imprégnation desdites fibres de renforcement (2) avec ledit matériau de matrice,
vi. le durcissement ou la solidification dudit matériau de matrice,
vii. l'agencement dudit matériau deformable (4) à l'intérieur de ladite deuxième partie pour définir ladite zone de déformation (22),
viii. la fourniture dudit composant structurel avec des structures coopérantes définissant un espace de serrage (116), et
ix. le placement dudit profilé d'isolation structurel (10) de manière à ce qu'une partie de celui-ci, y compris la zone de déformation (22), est positionée dans ledit espace de serrage (116), lesdites structures coopérantes étant forcées ensemble pour serrer le profilé d'isolation structurel (10) et pour déformer la zone de déformation (22) afin de former une encoche.

11. Procédé selon la revendication 10, ledit matériau déformable comprenant un matériau solide, et l'étape vii étant effectuée avant l'étape vi, préférablement avant l'étape v, et plus préférablement simultanément avec l'étape iv.

12. Procédé selon la revendication 10, ledit matériau deformable (4) comprenant un matériau fluide capable de se transformer en forme solide par durcissement ou solidification, l'étape vii étant effectuée après l'étape vi, le procédé comprenant en outre l'étape du:
x. durcissement ou de solidification dudit matériau deformable (4).

13. Procédé selon l'une quelconque des revendications 10 à 12, ledit procédé comprenant un procédé de pultrusion et lesdites fibres de renforcement (2) étant fournies comme matériau continu.

14. Procédé selon la revendication 13, comprenant en outre les étapes de:
xi. la fourniture dudit matériau deformable (4) comme matériau continu, et
xii. la fourniture d'un dispositif de pultrusion (300) comprenant:
a. une première bobine portant lesdite fibres de renforcement (2),
b. une deuxième bobine portant ledit matériau deformable (4),
c. un dispositif de collection et d'agencement (302) adapté pour recevoir lesdites fibres de renforcement et ledit matériau deformable desdites première et deuxième bobines et adapté pour effectuer les étapes iv et vii,
d. un dispositif de configuration et d'imprégnation de matériau de matrice (304) connecté à une source de matériau de matrice (306) et adapté pour recevoir lesdites fibres de renforcement (2) et ledit matériau deformable (4) après leur passage par ledit dispositif de collection et d'agencement (302), ledit dispositif de configuration et d'imprégnation de matériau de matrice (304) étant en outre adapté pour effectuer l'étape v,
e. un dispositif de durcissement (314) adapté pour recevoir ledit profilé d'isolation structurel (10) suite à sa sortie dudit dispositif de configuration et d'imprégnation de matériau de matrice (304), ledit dispositif de durcissement (314) étant en outre adapté pour effectué l'étape vi, et,
f. un dispositif de tirage (310) adapté pour enclencher et tirer ledit profilé d'isolation structurel (10) à travers ledit dispositif de pultrusion,
ou alternativement les étapes de:
xii. la fourniture dudit matériau deformable (4) comme un matériau fluide, et
xiv. la fourniture d'un dispositif de pultrusion et d'une extrudeuse combiné (300') comprenant
g. une première bobine portant les fibres de renforcement (2),
h. un dispositif de collection et d'agencement (302') adapté pour recevoir lesdites fibres de renforcement de ladite première bobine et adapté pour effectuer l'étape iv,
i. un dispositif de configuration et d'imprégnation de matériau de matrice (304') connecté à une source dudit matériau de matrice (306) et adapté pour recevoir lesdites fibres de renforcement (2) suite à leur passage par ledit dispositif de collection et d'agencement (302'), ledit dispositif de configuration et d'imprégnation de matériau de matrice (304') étant en outre adapté pour effectuer l'étape v,
j. dispositif de durcissement (314') adapté pour recevoir ledit profilé isolant structurel (8') suite à sa sortie dudit dispositif de configuration et d'imprégnation de matériau de matrice (304'), ledit dispositif de durcissement (314') étant en outre adapté pour effectuer l'étape vi,
k. un dispositif de tirage (310') adapté pour enclencher et tirer ledit profilé d'isolation structurel (8') à travers ledit dispositif de pultrusion et d'une extrudeuse combiné (300'),
l. un dispositif d'extrusion de matériau déformable (320) adapté pour recevoir ledit profilé d'isolation structurel (8') et ledit matériau déformable et adapté pour effectuer l'étape vii, et,
m. un dispositif de durcissement ultérieur (314") adapté pour recevoir ledit profilé isolant structurel (8") après sa sortie dudit dispositif d'extrusion de matériau déformable (320), ledit dispositif de durcissement ultérieur (314") étant en outre adapté pour effectuer l'étape x.

15. Procédé selon l'une quelconque des revendications 10 à 12, ledit procédé comprenant un procédé d'extrusion et lesdites fibres de renforcement étant fournies comme des fibres courtes.

16. Procédé selon la revendication 15, comprenant en outre les étapes de:
xv. la fourniture d'un matériau deformable (4) comme matériau continu, et,
xvi. la fourniture d'une extrudeuse (400) comprenant:
n. une enceinte d'extrudeuse (404) ayant une première entrée (414) pour recevoir ledit matériau de matrice et lesdites fibres de renforcement (412),
o. un moule (416) connecté à ladite enceinte d'extrudeuse (404) et ayant une deuxième entrée pour recevoir ledit matériau déformable (422), ledit moule étant en outre adapté pour effectuer les étapes iv et vii,
p. une vis d'extrudeuse (402) placée à l'intérieur de ladite enceinte d'extrudeuse (404) et adaptée pour transporter ledit matériau de matrice et lesdites fibres de renforcement (412) vers ledit moule (416), ladite vise d'extrudeuse (402) étant en outre adaptée pour effectuer l'étape v, et
q. un dispositif de durcissement (428) adapté pour recevoir ledit profilé d'isolation structurel (8"') suite à sa sortie dudit moule (416), ledit dispositif de durcissement (428) étant en outre adapté pour effectuer l'étape vi,
ou alternativement les étapes de
xvii. la fourniture d'un matériau deformable (4) comme matériau fluide, et
xviii. la fourniture d'une extrudeuse (400) comprenant:
r. une enceinte d'extrudeuse (404) ayant une première entrée (414) pour recevoir ledit matériau de matrice et lesdites fibres de renforcement (412),
s. un moule (416) connecté à ladite enceinte d'extrudeuse (404) et étant adapté pour effectuer les étapes iv et vi,
t. une vis d'extrudeuse (402) placée à l'intérieur de ladite enceinte d'extrudeuse (404) et adaptée pour transporter ledit matériau de matrice vers ledit moule (416), ladite vis d'extrudeuse (402) étant en outre adaptée pour effectuer l'étape v, et,
u. un dispositif de durcissement (428) adapté pour recevoir ledit profilé d'isolation structurel (8"') suite à sa sortie dudit moule (416), ledit dispositif de durcissement (428) étant adapté pour effectuer l'étape vii, et
v. un dispositif d'extrusion de matériau déformable (320) adapté pour recevoir ledit profilé d'isolation structurel (8') et ledit matériau déformable et adapté pour effectuer l'étape vii, et
w. un dispositif de durcissement ultérieur (314") adapté pour recevoir ledit profilé d'isolation structurel (8"') suite à sa sortie dudit dispositif d'extrusion de matériau déformable (320), ledit dispositif de durcissement ultérieur (314") étant en outre adapté pour effectuer l'étape xi.
